# NEW EUROPEAN PATENT SPECIFICATION

(11) **EP 1 139 476 B2**
(45) Date of publication and mention of the opposition decision: **14.09.2011**
(45) Mention of the grant of the patent: 15.10.2008
(21) Application number: 01107720.3
(22) Date of filing: 30.03.2001
(51) Int. Cl.: H01M 8/10, H01M 8/04, H01M 8/02

(54) **Fuel cell and fuel cell device**
Brennstoffzelle und Brennstoffzellenanlage
Pile à combustible et dispositif de pile à combustible

(30) Priority: 31.03.2000 JP 2000098419
(43) Date of publication of application: 04.10.2001
(73) Proprietor: Kabushikikaisha Equos Research, Tokyo-to (JP)
(72) Inventor: Yamamoto, Taizo, Equos Research K.K., Chiyoda-ku, Tokyo (JP); Kobayashi, Masafumi, Equos Research K.K., Chiyoda-ku, Tokyo (JP); Yamana, Kenji, Equos Research K.K., Chiyoda-ku, Tokyo (JP); Kato, Hidemi, Equos Research K.K., Chiyoda-ku, Tokyo (JP)
(74) Representative: Vossius & Partner

(56) References cited:
- EP-A- 0 791 974
- EP-A1- 0 791 974
- EP-A1- 0 928 036
- CA-A1- 2 052 221
- US-A- 5 350 643
- US-A- 5 500 292

## Description

The present inventions relate to fuel cells and fuel cell devices.

Today, fuel cells are attracting attentions as the energy source in next generation. A fuel cell has two kinds of electrodes, a fuel electrode and an oxygen electrode, and generates electricity by oxidizing fuel at its fuel electrode and reducing oxygen at its oxygen electrode.

US5350643 discloses a SPEFC wherein the water-repellency of the reactive layer of the hydrogen electrode is higher than the water-repellency of the reactive layer of the oxygen electrode.

Now, enhancing cell outputs of the fuel cells is becoming a hot issue.

Therefore, the objects of the present inventions are to provide fuel cells and fuel cell devices capable of improving their cell outputs. These objects are achieved with the features of the claims.

In order to achieve the above objects, the present invention is directed to a fuel cell according to claim 1.

According to the present invention described above, cell outputs of fuel cells can be enhanced. Thus, according to the present invention, fuel cells and fuel cell devices, which bring high cell outputs, can be provided.

In this invention, each of the fuel-diffusion layer and the oxygen-diffusion layer has at least one water-repellent-material-containing layer which contains a material having water repellency, and the water-repellent-material-containing layer of the fuel-diffusion layer has higher water-repellency than that of the oxygen-diffusion layer. In this case, it is preferred that the content of the material having water repellency in the water-repellent-material-containing layer of the fuel-diffusion layer is larger than that of the material having water repellency in the water-repellent-material-containing layer of the oxygen-diffusion layer.

Further, in this invention, it is also preferred that the content of the material having water repellency in the water-repellent-material-containing layer of the fuel-diffusion layer is larger than that of the material having water repellency in the water-repellent-material-containing layer of the oxygen-diffusion layer by at least 5wt%.

Furthermore, in this invention, it is also preferred that the content of the material having water repellency in the water-repellent-material-containing layer of the fuel-diffusion layer is 20 to 80wt%.

Moreover, in this invention, it is also preferred that the content of the material having water repellency in the water-repellent-material-containing layer of the oxygen-diffusion layer is 15 to 65wt%.

Still further, in this invention, it is also preferred that the water-repellent-material-containing layer of the fuel-diffusion layer and the water-repellent-material-containing layer of the oxygen-diffusion layer include a conductive material, respectively, in which the conductive material in the water-repellent-material-containing layer of the fuel-diffusion layer has higher water-repellency than that of the conductive material in the water-repellent-material-containing layer of the oxygen-diffusion layer.

Still further, in this invention, it is also preferred that the water-repellent-material-containing layer is a layer in which the water repellency material is carried by a particulate conductive material.

Still further, in this invention, it is also preferred that the fuel-diffusion layer has the water-repellent-material-containing layers at its both sides.

Still further, in this invention, it is also preferred that the oxygen-diffusion layer has the water-repellent-material-containing layers at its both sides.

Still further, in this invention, it is also preferred that the water contact angle on the surface of the fuel-diffusion layer is larger than the water contact angle on the surface of the oxygen-diffusion layer by at least 5°.

Still further, in this invention, it is also preferred that the water contact angle on the surface of the fuel-diffusion layer is 100 to 160°.

Still further, in this invention, it is also preferred that the water contact angle on the surface of the oxygen-diffusion layer is 90 to 150°.

Still further, in this invention, it is also preferred that the fuel cell uses hydrogen as fuel.

Another aspect of the present invention is directed to a fuel cell devise, comprising a fuel cell as described above.

Further, another aspect of the present invention is directed to a fuel cell devise, comprising:
a fuel cell main body which includes
   (a) a fuel electrode which has a fuel-diffusion layer for diffusing fuel;
   (b) an oxygen electrode which has an oxygen-diffusion layer for diffusing oxygen, the fuel-diffusion layer having higher water-repellency than that of the oxygen-diffusion layer; and
   (c) an electrolyte layer which is arranged between the fuel electrode and the oxygen electrode;
fuel supply means for supplying fuel to the fuel electrode; and
oxygen supply means for supplying gas containing oxygen gas to the oxygen electrode.

In this invention, it is preferred that the fuel cell device further comprises water supply means for supplying water to the oxygen electrode.

These and other objects, structures and advantages will be readily apparent from the following description of the preferred embodiments and examples taken in conjunction with the applied drawings.
FIG. 1 is a schematic vertical cross-sectional view showing an embodiment of a fuel cell of the present invention;
FIG. 2 is a circuit diagram showing an embodiment of a fuel cell device of the present invention; and
FIG. 3 is a graph showing the current density - voltage relations of the fuel cells in the examples.

The important thing to enhance a cell output of a fuel cell is the water balance in the fuel cell. As described above, a fuel cell generates electricity by oxidizing fuel at its fuel electrode and reducing oxygen at its oxygen electrode. At this time, water is generated at the oxygen electrode, and hydrogen ions are generated at the fuel electrode. These hydrogen ions move to the oxygen electrode, taking water molecules. Therefore, in the fuel cell that is generating electricity, there is a tendency that water increases in the oxygen electrode, and water decreases in the hydrogen electrode. When the amount of water in the oxygen electrode becomes too large, the oxygen becomes apt to not enter the oxygen electrode, and the supply of the oxygen to the oxygen electrode becomes insufficient. Furthermore, when the amount of water in the fuel electrode becomes too small, the efficiency of generating hydrogen ions decline. These phenomena decrease a cell output of the fuel cell.

The inventors of the present invention aimed their attention to such a mechanism of the cell output decrease. Then, the inventors considered that if the water balance in the fuel cell could be maintained satisfactorily and the water amount in both of the oxygen electrode and the fuel electrode could be kept properly, the cell output of the fuel cell could be prevented from being decreased so that the cell output could be enhanced. From this hypothesis, the inventors achieved the present invention.

Hereinafter, the present invention will be described with reference to the appended drawings.

### (1) Overview of a fuel cell

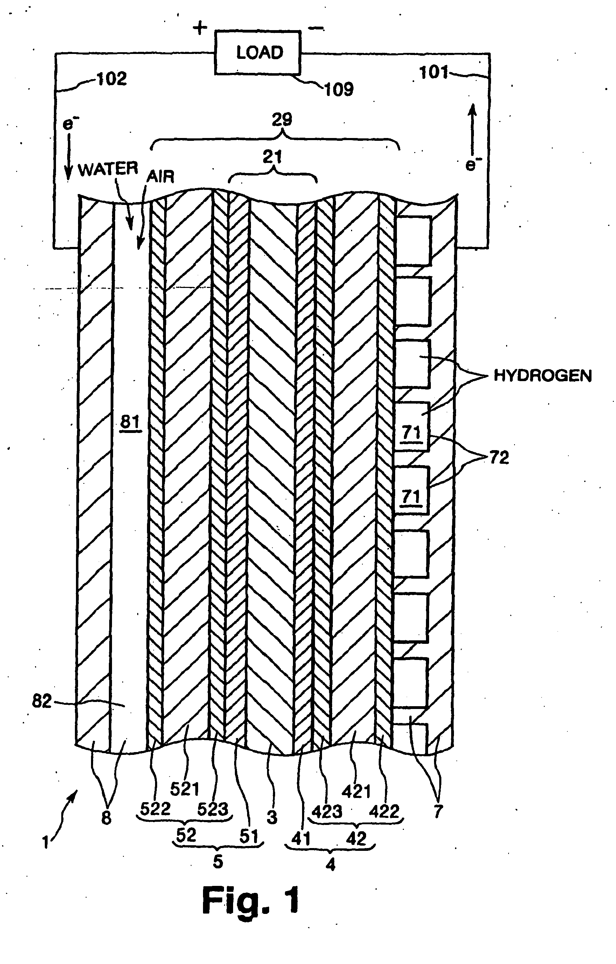

FIG. 1 is a schematic vertical cross-sectional view showing an embodiment of a fuel cell of the present invention.

As shown in FIG. 1, a fuel cell 1 of the present invention has a fuel electrode 4 equipped with a fuel-reactive layer 41 and a fuel-diffusion layer 42**,** an oxygen electrode 5 equipped with an oxygen-reactive layer 51 and an oxygen-diffusion layer 52, an electrolyte layer 3 that is provided between the fuel electrode 4 and the oxygen electrode 5 and is in contact with the fuel-reactive layer 41 and the oxygen-reactive layer 51, a fuel-electrode-side cell frame 7 that is in contact with the fuel electrode 4, and an oxygen-electrode-side cell frame 8 that is in contact with the oxygen electrode 5. Moreover, the fuel-diffusion layer 42 has a fuel-diffusion-layer core portion 421, a fuel-electrode-outside water-repellent-material-containing layer 422, and a fuel-electrode-inside water-repellent-material-containing layer 423. Also, the oxygen-diffusion layer 52 has an oxygen-diffusion-layer core portion 521, an oxygen-electrode-outside water-repellent-material-containing layer 522, and an oxygen-electrode-inside water-repellent-material-containing layer 523.

In the fuel cell 1, the electrolyte layer 3, the fuel-reactive layer 41 joined to one surface of the electrolyte layer 3, and the oxygen-reactive layer 51 joined to the other surface of the electrolyte layer 3 constitute a reactive portion 21, a portion where chemical reactions occur and electricity is generated. In the fuel cell 1, the fuel electrode 4, the oxygen electrode 5, and the electrolyte layer 3 provided between the fuel electrode 4 and the oxygen electrode 5 constitute a layered body (laminated body) 29.

In the present specification, for convenience of description of the fuel cell 1, the position relatively close to the electrolyte layer 3 is referred to as an "inside", and the position relatively far from the electrolyte layer 3 is referred to as an "outside".

The fuel cell 1 shown in FIG. 1 is a type of a fuel cell that uses hydrogen as fuel, and can generate electricity by oxidizing the hydrogen supplied to the fuel electrode 4 and reducing oxygen in the air supplied to the oxygen electrode 5.

In the fuel cell 1 of the present invention, the water repellency of the fuel-diffusion layer 42 is prescribed to be higher than that of the oxygen-diffusion layer 52. More specifically, in the fuel cell 1 of the present embodiment, that the water repellency of the fuel-diffusion layer 42 is set higher than that of the oxygen-diffusion layer 52 is done by making the water repellency of the fuel-electrode-inside water-repellent-material-containing layer 423 and the fuel-electrode-outside water-repellent-material-containing layer 422 higher than that of the oxygen-electrode-inside water-repellent-material-containing layer 523 and the oxygen-electrode-outside water-repellent-material-containing layer 522.

By this prescription, the water balance in the fuel cell 1 can be kept in a state appropriate to generating electricity. In addition, as in the fuel cell 1 of the present invention, if the water repellency of the fuel-diffusion layer 42 and the oxygen-diffusion layer 52 is adjusted, the water balance in the fuel cell 1 can be kept in a state appropriate to generating electricity without increasing electric resistances of the fuel-reactive layer 41 and the oxygen-reactive layer 51.

Hereinafter, the fuel cell 1 is described in detail on a component basis.

### (2) Fuel electrode 4

The fuel electrode (negative electrode; anode) 4 is composed of, in the order from the outside, the fuel-diffusion layer 42 having the fuel-electrode-outside water-repellent-material-containing layer 422, the fuel-diffusion-layer core portion 421, and the fuel-electrode-inside water-repellent-material-containing layer 423, and the fuel-reactive layer 41 joined to the fuel-diffusion layer 42.

### (2.1) Fuel-diffusion layer 42

The fuel-diffusion layer 42 has a function of diffusing hydrogen supplied to the fuel electrode 4 and lessening nonuniformity of the hydrogen supply to the fuel-reactive layer 41. The fuel-diffusion layer 42 also provides a path for electricity generated in the fuel-reactive layer 41. Moreover, the fuel-diffusion layer 42 plays a role in keeping the water balance in the fuel cell 1 in a state appropriate to generating electricity, with the oxygen-diffusion layer 52, which is described later.

From this viewpoint, in the fuel cell 1 of the present embodiment, at both sides of the fuel-diffusion layer 42 are provided layers containing a water-repellent material. Thereby, the above-mentioned effects can be obtained more effectively. In the present specification, for convenience of description, the layer containing a water-repellent material (hydrophobic material) is usually referred to as a "water-repellent-material-containing layer".

Hereinafter, the fuel-diffusion layer 42 is described in more detail.

As shown in FIG. 1, the fuel-diffusion layer 42 has a structure in which water-repellent-material-containing layers are respectively provided on both surfaces of the fuel-diffusion-layer core portion (core layer) 421 constituting a main portion of the fuel-diffusion layer 42. In the present specification, for convenience of description, the water-repellent-material-containing layer provided at the outside of the fuel-diffusion layer 42 is usually referred to as the "fuel-electrode-outside water-repellent-material-containing layer 422", and the water-repellent-material-containing layer provided at the inside of the fuel-diffusion layer 42 is usually referred to as the "fuel-electrode-inside water-repellent-material-containing layer 423".

In other words, the fuel-diffusion layer 42 has a structure in which the fuel-electrode-outside water-repellent-material-containing layer 422 is provided on an outer surface of the fuel-diffusion-layer core portion 421 and the fuel-electrode-inside water-repellent-material-containing layer 423 is provided on an inner surface of the fuel-diffusion-layer core portion 421.

### (2.1.1) Fuel-diffusion-layer core portion 421

The fuel-diffusion-layer core portion 421 constitutes a main portion of the fuel-diffusion layer 42**.** In this fuel-diffusion-layer core portion 421, hydrogen supplied to the fuel electrode 4 is well diffused. The fuel-diffusion-layer core portion 421 also provides a path for electricity generated in the fuel-reactive layer 41. Moreover, the fuel-diffusion-layer core portion 421 has a function of enhancing the strength of the fuel cell 1.

The fuel-diffusion-layer core portion 421 is composed of, for example, a porous conductive material represented by a porous carbon material such as carbon fiber fabric (e.g., carbon cloth, carbon felt, and the like), carbon paper, and etc.; and so on. Thereby, the fuel-diffusion-layer core portion 421 can exhibit the above-mentioned function well.

It is especially preferable that the fuel-diffusion-layer core portion 421 be composed of the carbon fiber fabric such as carbon cloth, carbon felt, and the like. The carbon fiber fabric is excellent in a property of hydrogen diffusion. The carbon fiber fabric is also excellent in enhancement of the strength of the fuel cell 1.

The thickness of the fuel-diffusion-layer core portion 421 should be set preferably in a range of about 50 to 2000 µm and more preferably in a range of about 100 to 800 µm though not particularly limited. If the fuel-diffusion-layer core portion 421 is too thin, the strength of the fuel cell 1 may decline. In addition, if the fuel-diffusion-layer core portion 421 is too thin, the fuel-diffusion-layer core portion 421 may not diffuse hydrogen gas efficiently. On the other hand, if the fuel-diffusion-layer core portion 421 is too thick, efficiency of hydrogen gas supply to the fuel-reactive layer 41 may be decreased.

### (2.1.2) Fuel-electrode-inside water-repellent-material-containing layer 423

The fuel-electrode-inside water-repellent-material-containing layer 423 plays an important role in adjusting the water repellency of the fuel-diffusion layer 42, with the fuel-electrode-outside water-repellent-material-containing layer 422. Furthermore, the fuel-electrode-inside water-repellent-material-containing layer 423 provides paths for hydrogen gas and electricity.

From such a viewpoint, the fuel-electrode-inside water-repellent-material-containing layer 423 in the fuel cell 1 of the present embodiment contains a material having water repellency (hydrophobicity) (in the present specification, usually referred to as a "water-repellent material") and a conductive material. That the fuel-electrode-inside water-repellent-material-containing layer 423 contains the water-repellent material makes it easy to adjust the water repellency of the fuel-electrode-inside water-repellent-material-containing layer 423 and also the fuel-diffusion layer 42 as the effects described later is well obtained. That the fuel-electrode-inside water-repellent-material-containing layer 423 contains the conductive material (e.g., a carbon material such as carbon powder and the like) brings the fuel-diffusion layer 42 excellent conductivity.

It is preferable that the fuel-electrode-inside water-repellent-material-containing layer 423 have a constitution in which the water-repellent material is carried by a particulate conductive material (e.g., carbon powder and the like). This constitution allows the hydrogen gas to pass through the fuel-electrode-inside water-repellent-material-containing layer 423 well. In the case where the conductive material is particular, the average particle diameter should be set preferably in a range of about 0.01 to 0.1 µm though not particularly limited.

Examples of the water-repellent material contained in the fuel-electrode-inside water-repellent-material-containing layer 423 include a fluorine material such as fluorocarbon resin (e.g., polytetrafluoroethylene, tetrafluoroethylene-perfluoroalkylvinylether copolymer, tetrafluoroethylene-hexafluoropropylene copolymer, and the like) and carbon fluoride, silicone resin, polyethylene, polystyrene, and etc.

As the water-repellent material used for the fuel-electrode-inside water-repellent-material-containing layer 423, fluorocarbon resin such as polytetrafluoroethylene, tetrafluoroethylene-perfluoroalkylvinylether copolymer, tetrafluoroethylene-hexafluoropropylene copolymer, and the like is especially preferable. Thereby, the fuel-electrode-inside water-repellent-material-containing layer 423 can gain relatively high water-repellency with a relatively low content of the water-repellent material. This situation allows the fuel-electrode-inside water-repellent-material-containing layer 423 to contain a relatively large amount of conductive material so as to make it easy to enhance the conductivity of the fuel-diffusion layer 42. In particular, when polytetrafluoroethylene is used as the water-repellent material for the fuel-electrode-inside water-repellent-material-containing layer 423, hydrogen gas permeability of the fuel-electrode-inside water-repellent-material-containing layer 423 is enhanced.

The thickness of the fuel-electrode-inside water-repellent-material-containing layer 423 should be set preferably in a range of about 2 to 100 µm and more preferably in a range of about 5 to 50 µm though not particularly limited. Thereby, the fuel-electrode-inside water-repellent-material-containing layer 423 can exhibit the above-mentioned functions and effects more satisfactorily.

### (2.1.3) Fuel-electrode-outside water-repellent-material-containing layer 422

As described above, the fuel-electrode-outside water-repellent-material-containing layer 422 plays an important role in adjusting water repellency of the fuel-diffusion layer 42, with the fuel-electrode-inside water-repellent-material-containing layer 423. Furthermore, the fuel-electrode-outside water-repellent-material-containing layer 422 provides paths for hydrogen gas and electricity.

Preferable conditions of the fuel-electrode-outside water-repellent-material-containing layer 422, such as materials, the thickness, and the like are same as those described in the section of the fuel-electrode-inside water-repellent-material-containing layer 423. Therefore, description about these is omitted here.

In the fuel cell 1 of the present embodiment, the water repellency of the above-mentioned fuel-electrode-outside water-repellent-material-containing layer 422 and the fuel-electrode-inside water-repellent-material-containing layer 423 is higher than that of the water-repellent-material-containing layers of the oxygen-diffusion layer 52, which is described later. Detail about this point is described after explaining the oxygen electrode 5.

### (2.2) Fuel-reactive layer 41

The fuel-reactive layer 41 contains a catalyst that promotes hydrogen oxidation, and can oxidize the hydrogen, or fuel.

The fuel-reactive layer 41 contains a catalyst that promotes hydrogen oxidation, and, depending on necessity, a carrier for carrying the catalyst and ion-exchange resin.

As the catalyst, for example, transition metal such as platinum metal (platinum (Pt), ruthenium (Ru), rhodium (Rh), palladium (Pd), osmium (Os), iridium (Ir), and the like), gold (Au) and etc., alloys of these metals, alloys of these metals and other metals, and so on are used.

It is especially preferable to use platinum or a platinum alloy as the catalyst of the fuel-reactive layer 41. Platinum and the platinum alloy are excellent in the function of promoting hydrogen oxidation. Therefore, if platinum or the platinum alloy is used as the catalyst of the fuel electrode 4, the fuel cell 1 can oxidize hydrogen efficiently in the fuel electrode 4, and its cell output will be enhanced.

It is preferable that the above-mentioned catalyst be in the form of particles (fine particles). Thereby, the specific surface area of the catalyst is increased, and efficiency of the hydrogen oxidation is enhanced.

In this case, the average particle diameter of the catalyst particles should be set preferably in a range of about 1 to 1000 nm though not particularly limited. Furthermore, the specific surface area of the catalyst particles should be set preferably in a range of about 5 to 300 m²/g. Thereby, efficiency of the hydrogen oxidation is further enhanced.

In the case where the catalyst is in the form of particles, it is recommended that such a catalyst be carried (supported) by a carrier (support). Thereby, the fuel-reactive layer 41 can hold the catalyst well.

As the carrier of the catalyst, for example, a carbon material such as carbon powder and the like can be used. The carbon material has an excellent ability of carrying the catalyst. Furthermore, if the catalyst is carried by the carbon material, the conductivity of the fuel-reactive layer 41 is enhanced, so that the internal resistance of the fuel cell 1 is decreased. Therefore, the cell output of the fuel cell 1 is augmented.

In the case where the particulate carrier such as carbon powder and the like is used as the carrier of the catalyst, its average particle diameter should be set preferably in a range of about 0.01 to 1 µm though not particularly limited. Thereby, the carrier can carry the catalyst as the catalyst exhibits an excellent catalytic activity.

It is preferable that the fuel-reactive layer 41 contain ion-exchange resin. Thereby, hydrogen ions generated in the fuel-reactive layer 41 can move smoothly into the electrolyte layer 3. Therefore, the fuel cell 1 can generate electricity more efficiently.

As such ion-exchange resin, same kind of resin that is listed in the section of the electrolyte layer 3, which is described later, can be used.

The fuel-reactive layer 41 should contain the catalyst with content preferably in a range of about 1 to 80 wt% and more preferably in a range of about 10 to 50 wt% though the content varies slightly depending upon the kind of the catalyst, the presence/absence and kind of submaterials (carrier, ion-exchange resin), and etc. If the content of the catalyst is too small, the fuel-reactive layer 41 may not be able to oxidize hydrogen sufficiently, and its cell output may be decreased.

In the case where the fuel-reactive layer 41 contains the carrier that carries the catalyst, the fuel-reactive layer 41 should contain the carrier with content preferably in a range of about 5 to 60 wt% and more preferably in a range of about 10 to 40 wt% though the content varies slightly depending upon the kind, content, and etc. of the catalyst. Thereby, the carrier can carry the catalyst more satisfactorily. Furthermore, conductivity of the fuel-reactive layer 41 can be enhanced.

In the case where the fuel-reactive layer 41 contains the ion-exchange resin, the fuel-reactive layer 41 should contain the ion-exchange resin with content preferably in a range of about 5 to 60 wt% and more preferably in a range of about 10 to 40 wt% though the content varies slightly depending upon the kind, content, and etc. of the catalyst. Thereby, hydrogen ions can move into the electrolyte layer 3 more smoothly.

The thickness of the fuel-reactive layer 41 should be set preferably in a range of about 1 to 100 µm, more preferably in a range of about 1 to 50 µm though it varies slightly depending upon the materials composing the fuel-reactive layer 41. If the fuel-reactive layer 41 is too thick, it may become uneasy that hydrogen, hydrogen ions, and the like move in the fuel-reactive layer 41.

### (3) Electrolyte layer 3

The electrolyte layer 3 contains an electrolyte, and has a function as a medium for hydrogen ions to move.

The electrolyte layer 3 can be composed of, for example, ion-exchange resin (solid electrolyte) such as Nafion (Trademark), a water-retaining material (e.g., woven fabric, nonwoven fabric, paper, and the like) carrying (impregnated with) an electrolyte solution such as sulfuric acid and the like, and so on.

In the fuel cell 1 of the present invention, if the electrolyte layer 3 is composed of the ion-exchange resin, the cell output of the fuel cell 1 is especially enhanced.

The thickness of the electrolyte layer 3 should be set preferably in a range of about 1 to 1000 µm and more preferably in a range of about 10 to 100 µm though not particularly limited. If the electrolyte layer 3 is too thick, it may become uneasy for the hydrogen ions to move in the electrolyte layer 3, and this situation may provoke a decrease of the cell output. In contrast, if the electrolyte layer 3 is too thin, hydrogen may markedly permeate into the oxygen electrode 5, so that a decrease of output voltage may be brought about. Furthermore, in this case, the mechanical strength of the layered body 29 may be relatively decreased. Therefore, if such a fuel cell 1 is installed in a vehicle or the like, the electrolyte layer 3 may rupture under certain vibrating conditions.

### (4) Oxygen electrode 5

The oxygen electrode (positive electrode; cathode) 5 is composed of, in the order from outside, the oxygen-diffusion layer 52 having the oxygen-electrode-outside water-repellent-material-containing layer 522, the oxygen-diffusion-layer core portion 521, and the oxygen-electrode-inside water-repellent-material-containing layer 523, and the oxygen-reactive layer 51 joined to the oxygen-diffusion layer 52.

### (4.1) Oxygen-diffusion layer 52

The oxygen-diffusion layer 52 has a function of diffusing oxygen supplied to the oxygen electrode 5 and lessening nonuniformity of the oxygen supply to the oxygen-reactive layer 51. The oxygen-diffusion layer 52 also provides a path for electricity to the oxygen-reactive layer 51. Moreover, the oxygen-diffusion layer 52 plays a role in keeping the water balance in the fuel cell 1 in a state appropriate to generating electricity, with the fuel-diffusion layer 42.

From this viewpoint, in the fuel cell 1 of the present embodiment, at both sides of the oxygen-diffusion layer 52 are provided layers containing a water-repellent material. Thereby, the above-mentioned effects can be obtained more effectively.

Hereinafter, the oxygen-diffusion layer 52 is described in more detail.

As shown in FIG. 1, the oxygen-diffusion layer 52 has a structure in which water-repellent-material-containing layers are respectively provided on both surfaces of the oxygen-diffusion-layer core portion (core layer) 521 constituting a main portion of the oxygen-diffusion layer 52. In the present specification, for convenience of description, the water-repellent-material-containing layer provided at the outside of the oxygen-diffusion layer 52 is usually referred to as the "oxygen-electrode-outside water-repellent-material-containing layer 522", and the water-repellent-material-containing layer provided at the inside of the oxygen-diffusion layer 52 is usually referred to as the "oxygen-electrode-inside water-repellent-material-containing layer 523".

In other words, the oxygen-diffusion layer 52 has a structure in which the oxygen-electrode-outside water-repellent-material-containing layer 522 is provided on an outer surface of the oxygen-diffusion-layer core portion 521, and the oxygen-electrode-inside water-repellent-material-containing layer 523 is provided on an inner surface of the oxygen-diffusion-layer core portion 521.

### (4.1.1) Oxygen-diffusion-layer core portion 521

The fuel-diffusion-layer core portion 521 constitutes a main portion of the oxygen-diffusion layer 52. In this oxygen-diffusion-layer core portion 521, oxygen supplied to the oxygen electrode 5 is well diffused. The oxygen-diffusion-layer core portion 521 also provides a path for electricity to the oxygen-reactive layer 51. Moreover, the oxygen-diffusion-layer core portion 521 has a function of enhancing the strength of the fuel cell 1.

Preferable conditions of the oxygen-diffusion-layer core portion 521 such as a material, the thickness, and the like of the oxygen-diffusion-layer core portion 521 are same as those described in the section of the fuel-diffusion-layer core portion 421. Therefore, the description about them is omitted here.

### (4.1.2) Oxygen-electrode-inside water-repellent-material-containing layer 523

The oxygen-electrode-inside water-repellent-material-containing layer 523 plays an important role in adjusting the water repellency of the oxygen-diffusion layer 52, with the oxygen-electrode-outside water-repellent-material-containing layer 522. Furthermore, the oxygen-electrode-inside water-repellent-material-containing layer 523 provides paths for oxygen gas and electricity.

Preferable conditions except those described later such as materials, the thickness, and the like of the oxygen-electrode-inside water-repellent-material-containing layer 523 are same as those described in the section of the fuel-electrode-inside water-repellent-material-containing layer 423. Therefore, the description about them is omitted here.

### (4.1.3) Oxygen-electrode-outside water-repellent-material-containing layer 522

As described above, the oxygen-electrode-outside water-repellent-material-containing layer 522 plays an important role in adjusting water repellency of the oxygen-diffusion layer 52, with the oxygen-electrode-inside water-repellent-material-containing layer 523. Furthermore, the oxygen-electrode-outside water-repellent-material-containing layer 522 provides paths for oxygen gas and electricity.

Preferable conditions of the oxygen-electrode-outside water-repellent-material-containing layer 522 such as materials, the thickness, and the like of the oxygen-electrode-outside water-repellent-material-containing layer 522 are same as those described in the section of the oxygen-electrode-inside water-repellent-material-containing layer 523. Therefore, the description about them is omitted here.

As described above, in the fuel cell 1 of the present embodiment, the water repellency of the oxygen-electrode-outside water-repellent-material-containing layer 522 and the oxygen-electrode-inside water-repellent-material-containing layer 523 is lower than that of the fuel-electrode-outside water-repellent-material-containing layer 422 and the fuel-electrode-inside water-repellent-material-containing layer 423. Detail about this point is described after explaining the oxygen-reactive layer 51.

### (4.2) Oxygen-reactive layer 51

The oxygen-reactive layer 51 contains a catalyst that promotes oxygen reduction, and can reduce the oxygen.

The oxygen-reactive layer 51 contains a catalyst that promotes oxygen reduction, and, depending on necessity, a carrier for carrying the catalyst and ion-exchange resin.

As the catalyst, for example, transition metal such as platinum metal (platinum (Pt), ruthenium (Ru), rhodium (Rh), palladium (Pd), osmium (Os), iridium (Ir), and the like), gold (Au) and etc., alloys of these metals, alloys of these metals and other metals, and so on are used.

It is especially preferable to use platinum or a platinum alloy as the catalyst of the oxygen-reactive layer 51. Platinum and the platinum alloy are excellent in the function of promoting oxygen reduction. Therefore, if platinum or the platinum alloy is used as the catalyst of the oxygen electrode 5, the fuel cell 1 can reduce oxygen efficiently in the oxygen electrode 5, and its cell output will be enhanced.

It is preferable that the above-mentioned catalyst be in the form of particles (fine particles). Thereby, the specific surface area of the catalyst is increased, and efficiency of the oxygen reduction is enhanced. In this case, preferable conditions of the catalyst (average particle diameter, specific surface area, and the like) of the oxygen-reactive layer 51 are same as those described in the section of the fuel-reactive layer 41.

In the case where the catalyst is in the form of particles, it is recommended that such a catalyst be carried by a carrier. Thereby, the oxygen-reactive layer 51 can hold the catalyst well. The description about the carrier in the section of the fuel-reactive layer 41 can be applied to this carrier.

It is preferable that the oxygen-reactive layer 51 contain ion-exchange resin. Thereby, hydrogen ions moved from the electrolyte layer 3 can move smoothly into the oxygen-reactive layer 51. Therefore, the fuel cell 1 can generate electricity more efficiently. The description about the ion-exchange resin in the section of the fuel-reactive layer 41 can be applied to this ion-exchange resin.

Preferable conditions of the oxygen-reactive layer 51, such as contents of the catalyst, the carrier, ion-exchange resin contained in the oxygen-reactive layer 51, the thickness of the oxygen-reactive layer 51, and etc. are same as those described in the section of the fuel-reactive layer 41. Therefore, the description about them is omitted here.

### (4.3) Difference of the water-repellency between the fuel-diffusion layer 42 and the oxygen-diffusion layer 52

### (4.3.1)

The fuel cell 1 generates electricity by oxidizing fuel in the fuel-reactive layer 41 and reducing oxygen in the oxygen-reactive layer 51. At this time, water is generated in the oxygen-reactive layer 51. In addition, hydrogen ions are generated in the fuel-reactive layer 41. These hydrogen ions move into the oxygen-reactive layer 51 through the electrolyte layer 3, taking water molecules.

Therefore, while the fuel cell 1 is running, there is a tendency that water decreases in the fuel-reactive layer 41 and water increases in the oxygen-reactive layer 51. However, when the amount of water becomes excessive in the oxygen-reactive layer 51, oxygen becomes apt to not move into the oxygen-reactive layer 51 from the oxygen-diffusion layer 52. In other words, when the amount of water in the oxygen-reactive layer 51 becomes too large, the oxygen becomes unlikely to be supplied to the oxygen-reactive layer 51. In addition, when the amount of water becomes too small in the fuel-reactive layer 41, efficiency of generating hydrogen ions is decreased.

The inventors of the present invention considered that they could solve this problem and make the fuel cell 1 generate electricity efficiently if the amount of water in the oxygen-reactive layer 51 was prevented from being excessively increased and the amount of water in the fuel-reactive layer 41 was prevented from being excessively decreased.

For this purpose, in the fuel cell 1 of the present invention, the water repellency of the fuel-diffusion layer 42 is prescribed to be higher than that of the oxygen-diffusion layer 52.

When the water repellency of the fuel-diffusion layer 42 is prescribed to be higher than that of the oxygen-diffusion layer 52, i.e., when the water repellency of the oxygen-diffusion layer 52 is prescribed to be lower than that of the fuel-diffusion layer 42, water in the oxygen-reactive layer 51 is encouraged to pass through the oxygen-diffusion layer 52 and to be discharged efficiently out of the oxygen electrode 5. In addition, water in the fuel-reactive layer 41 is encouraged to not enter the fuel-diffusion layer 42 and, moreover, to not pass through the fuel-diffusion layer 42. Therefore, there arises an inclination that larger amounts of water are accumulated in the fuel-reactive layer 41.

Accordingly, in the fuel cell 1 of the present invention, the amount of water in the oxygen-reactive layer 51 is prevented from being excessively increased, and the amount of water in the fuel-reactive layer 41 is prevented from being excessively decreased. Therefore, in the fuel cell 1 of the present invention, reactions in the fuel-reactive layer 41 and the oxygen-reactive layer 51 are facilitated so that its cell output is enhanced.

Furthermore, if the water repellency of the fuel-diffusion layer 42 and the oxygen-diffusion layer 52 is adjusted, the water balance in the fuel cell 1 can be kept in a fine state even if the water repellencies of the fuel-reactive layer 41 and the oxygen-reactive layer 51 are not strictly adjusted.

Generally, fuel-reactive layers and oxygen-reactive layers contain ion-exchange resin in most cases. Therefore, for example, if the fuel-reactive layer and the oxygen-reactive layer were made contain a water-repellent material so as to adjust their water repellencies, the conductivity of the fuel-reactive layer and the oxygen-reactive layer would diminish. Therefore, the internal resistance of the fuel cell would increase so that the high cell output would be unlikely to be obtained.

In contrast, fuel-diffusion layers and oxygen-diffusion layers are usually unnecessary to contain the material which decreases conductivity and which is generally contained in the fuel-reactive layers and the oxygen-reactive layers. Thus, for example, even if the fuel-diffusion layer and the oxygen-diffusion layer are made contain a water-repellent material so as to adjust the water repellencies of the fuel-diffusion layer and the oxygen-diffusion layer, the electric resistances of the fuel-diffusion layer and the oxygen-diffusion layer are prevented from being excessively increased.

As a conclusion, if the water repellency of the fuel-diffusion layer 42 is prescribed to be higher than that of the oxygen-diffusion layer 52 as in the fuel cell 1 of the present invention, the water balance in the fuel cell 1 can be kept in a state appropriate to generating electricity without letting increase enormously the internal resistance of the fuel cell 1. It should be noted that such description does not exclude the prescription that adds water-repellent materials to the fuel-reactive layer 41 and/or the oxygen-reactive layer 51 and that makes difference between water repellency of the fuel-reactive layer 41 and that of the oxygen-reactive layer 51 in the present invention.

### (4.3.2) Difference between the water-repellent-material-containing layer in the fuel-diffusion layer 42 and that of the oxygen-diffusion layer 52

In this section, in order to prevent the description from being complicated and make the explanation concise and clear, it is assumed that the fuel-electrode-outside water-repellent-material-containing layer 422 is included in the fuel-electrode-inside water-repellent-material-containing layer 423, and that the oxygen-electrode-outside water-repellent-material-containing layer 522 is included in the oxygen-electrode-inside water-repellent-material-containing layer 523.

It is recommended that the difference between the water repellency of the fuel-diffusion layer 42 and that of the oxygen-diffusion layer 52 be realized by making difference between the water repellency of the fuel-electrode-inside water-repellent-material-containing layer 423 and that of the oxygen-electrode-inside water-repellent-material-containing layer 523.

Thereby, it becomes easy to adjust the water repellency of the fuel-diffusion layer 42 and the oxygen-diffusion layer 52. Furthermore, it becomes very easy to adjust the water balance in the fuel cell 1 so as to generate electricity smoothly and efficiently. In addition, the increase of the electric resistance of the entire fuel-diffusion layer 42 and the entire oxygen-diffusion layer 52 can be well suppressed.

For example, in the fuel cell 1, the water repellency of the fuel-electrode-inside water-repellent-material-containing layer 423 can be prescribed to be higher than that of the oxygen-electrode-inside water-repellent-material-containing layer 523 by setting the content of the water-repellent material in the fuel-electrode-inside water-repellent-material-containing layer 423 higher than that in the oxygen-electrode-inside water-repellent-material-containing layer 523.

If the water repellency is adjusted by the method described above, it becomes easy to adjust the water repellency of the fuel-electrode-inside water-repellent-material-containing layer 423 and the oxygen-electrode-inside water-repellent-material-containing layer 523 as the water balance in the fuel cell 1 becomes more suitable to generate electricity.

In the case where the water repellency is adjusted by the method described above, the content of the water-repellent material in the fuel-electrode-inside water-repellent-material-containing layer 423 should be prescribed to be higher than that in the oxygen-electrode-inside water-repellent-material-containing layer 523 preferably by at least 5 wt%, more preferably by at least 10 wt%, and further more preferably by at least 12.5 wt%. Thereby, an excessive increase of the water amount in the oxygen-reactive layer 51 can be prevented more satisfactorily, and an excessive decrease of the water amount in the fuel-reactive layer 41 can also be prevented more satisfactorily.

In such a fuel cell 1, the content of the water-repellent material in the fuel-electrode-inside water-repellent-material-containing layer 423 should be set preferably in a range of about 20 to 80 wt%, more preferably in a range of about 30 to 70 wt%, and further more preferably in a range of about 45 to 65 wt%. Thereby, the fuel-reactive layer 41 can hold an amount of water that is suitable for generating hydrogen ions efficiently and more satisfactorily.

Furthermore, the content of the water-repellent material in the oxygen-electrode-inside water-repellent-material-containing layer 523 should be set preferably in a range of about 15 to 65 wt%, more preferably in a range of about 25 to 55 wt%, and further more preferably in a range of about 30 to 50 wt%. Thereby, the oxygen-reactive layer 51 can discharge extra water more adequately.

In such a fuel cell 1, for example, the water repellency of the fuel-electrode-inside water-repellent-material-containing layer 423 can also be prescribed to be higher than that in the oxygen-electrode-inside water-repellent-material-containing layer 523 by setting the water repellency of the conductive material contained in the fuel-electrode-inside water-repellent-material-containing layer 423 higher than that of the conductive material contained in the oxygen-electrode-inside water-repellent-material-containing layer 523.

If the water repellency is adjusted by the method described above, the water repellency of the fuel-electrode-inside water-repellent-material-containing layer 423 and the oxygen-electrode-inside water-repellent-material-containing layer 523 can be adjusted with skillfully suppressing the increase of the electric resistance of the fuel-electrode-inside water-repellent-material-containing layer 423 and the oxygen-electrode-inside water-repellent-material-containing layer 523.

The degree of the water repellency of the conductive material can be indicated by the amount of a hydrophilic group contained in the conductive material and the amount of a hydrophobic group contained in the conductive material.

In such a fuel cell 1, it is preferable to set the thickness of the fuel-electrode-inside water-repellent-material-containing layer 423 larger than that of the oxygen-electrode-inside water-repellent-material-containing layer 523**.** Thereby, in the fuel electrode 4, the water tends to stay in the fuel-reactive layer 41 more satisfactorily, and in the oxygen electrode 5, the water tends to be discharged from the oxygen-reactive layer 51 more properly.

Such effects can be obtained more effectively if the thickness of the fuel-electrode-inside water-repellent-material-containing layer 423 is set larger by at least 5 µm than that of the oxygen-electrode-inside water-repellent-material-containing layer 523.

The thickness of the fuel-electrode-inside water-repellent-material-containing layer 423 may be set same as that of the oxygen-electrode-inside water-repellent-material-containing layer 523. Furthermore, the fuel-electrode-inside water-repellent-material-containing layer 423 may be made thinner than the oxygen-electrode-inside water-repellent-material-containing layer 523.

In such a fuel cell 1, in the case where the fuel-electrode-inside water-repellent-material-containing layer 423 and the oxygen-electrode-inside water-repellent-material-containing layer 523 are porous, it is preferable to set the porosity of the fuel-electrode-inside water-repellent-material-containing layer 423 lower than that of the oxygen-electrode-inside water-repellent-material-containing layer 523**.** Thereby, in the fuel electrode 4, the water tends to stay in the fuel-reactive layer 41 more nicely, and in the oxygen electrode 5, unnecessary water tends to be discharged from the oxygen-reactive layer 51 more nicely.

Such effects can be obtained more effectively if the porosity of the fuel-electrode-inside water-repellent-material-containing layer 423 is set lower by at least 5% than that of the oxygen-electrode-inside water-repellent-material-containing layer 523.

The porosity of the fuel-electrode-inside water-repellent-material-containing layer 423 may be set same as that of the oxygen-electrode-inside water-repellent-material-containing layer 523. Furthermore, the porosity of the fuel-electrode-inside water-repellent-material-containing layer 423 maybe set higher than that of the oxygen-electrode-inside water-repellent-material-containing layer 523.

In the case where the fuel-electrode-inside water-repellent-material-containing layer 423 is porous, the porosity of the fuel-electrode-inside water-repellent-material-containing layer 423 should be set preferably in a range of about 20 to 70% and more preferably in a range of about 35 to 55% though not particularly limited. Furthermore, in the case where the oxygen-electrode-inside water-repellent-material-containing layer 523 is porous, the porosity of the oxygen-electrode-inside water-repellent-material-containing layer 523 should be set preferably in a range of about 30 to 80% and more preferably in a range of about 45 to 65% though not particularly limited. Thereby, the above-mentioned effect can be obtained more satisfactorily.

An advantage that the hydrogen becomes apt to pass easily through the fuel-electrode-inside water-repellent-material-containing layer 423 is obtained if the fuel-electrode-inside water-repellent-material-containing layer 423 is made porous. Furthermore, an advantage that the oxygen becomes apt to pass easily through the oxygen-electrode-inside water-repellent-material-containing layer 523 is obtained, if the oxygen-electrode-inside water-repellent-material-containing layer 523 is made porous.

It should be remarked that the porosity of the fuel-electrode-inside water-repellent-material-containing layer 423 and the oxygen-electrode-inside water-repellent-material-containing layer 523 may not be within above-mentioned values.

In such a fuel cell 1, a water contact angle on the surface of the fuel-diffusion layer 42 should be larger than that on the surface of the oxygen-diffusion layer 52 preferably by at least 5° and more preferably by at least 10°. Thereby, the fuel cell 1 can obtain the above-mentioned effect more effectively.

In such a fuel cell 1, the water contact angle on the surface of the fuel-diffusion layer 42 should be preferably in a range of about 100 to 160° and more preferably in a range of about 130 to 150°. Thereby, the fuel-diffusion layer 42 allows water to stay in the fuel-reactive layer 41 more properly.

Moreover, in such a fuel cell 1, the water contact angle on the surface of the oxygen-diffusion layer 52 should be preferably in a range of about 90 to 150° and more preferably in a range of about 110 to 130°. Thereby, the oxygen-diffusion layer 52 can discharge water more satisfactorily.

In the fuel-diffusion layer 42, the water repellency of the fuel-electrode-inside water-repellent-material-containing layer 423 can be set equal to or different from that of the fuel-electrode-outside water-repellent-material-containing layer 422. Furthermore, in the oxygen-diffusion layer 52, the water repellency of the oxygen-electrode-inside water-repellent-material-containing layer 523 can be set equal to or different from that of the oxygen-electrode-outside water-repellent-material-containing layer 522.

Assuming that F2 represents the water repellency of the fuel-electrode-outside water-repellent-material-containing layer 422, F3 represents the water repellency of the fuel-electrode-inside water-repellent-material-containing layer 423, 02 represents the water repellency of the oxygen-electrode-outside water-repellent-material-containing layer 522, and 03 represents the water repellency of the fuel-electrode-inside water-repellent-material-containing layer 523, the relationships of the water repellencies among these four layers can be adjusted, for example, like followings: F2 = F3 > 03 = O2, F2 ≥ F3 > 03 > 02, F3 > F2 > O3 ≥ 02, F2 ≥ F3 > 02 > 03, F3 > F2 > 02 > 03. The relationships of the water repellencies among these four layers may be set other than those above.

As in the case of fuel cell 1 shown in FIG. 1, in the case where the fuel-diffusion layer 42 has plural water-repellent-material-containing layers, the "water repellency of a water-repellent-material-containing layer" of the fuel-diffusion layer 42 can be indicated by the average of the water repellency of each of the water-repellent material containing layers. Furthermore, as in the case of fuel cell 1 shown in FIG. 1, in the case where the oxygen-diffusion layer 52 has plural water-repellent-material-containing layers, the "water repellency of the water-repellent-material-containing layer" of the oxygen-diffusion layer 52 can be indicated by the average of the water repellency of each of the water-repellent-material-containing layers.

The water repellency of the fuel-diffusion layer 42 may be set higher than that of the oxygen-diffusion layer 52 by making the difference between the water repellency of the fuel-diffusion-layer core portion 421 and that of the oxygen-diffusion-layer core portion 521.

### (5) Cell frame

In the fuel cell 1, two cell frames (separators) are provided as between them is interposed the layered body 29 mentioned above. More specifically, the fuel-electrode-side cell frame 7 and the oxygen-electrode-side cell frame 8 are in contact with the fuel electrode 4 and the oxygen electrode 5, respectively, and these cell frames support the layered body 29.

The fuel-electrode-side cell frame 7 is shaped, for example, in such a figure that on a board are formed plural grooves, whose traverse cross-sectional shapes are rectangular, in parallel. In the fuel cell 1 shown in FIG. 1, the fuel-electrode-side cell frame 7 is provided as its side having the grooves 72 faces to the fuel electrode 4. In the fuel cell 1, flow paths 71 for hydrogen are formed by the grooves 72. Through these flow paths 71, hydrogen is supplied to the fuel electrode 4.

At the side where the grooves 72 are formed, portions of the surface that is not contributing to forming the grooves 72 are in contact with the fuel electrode 4 (more specifically, the fuel-electrode-outside water-repellent-material-containing layer 422). In addition, the fuel-electrode-side cell frame 7 is made of, for example, a conductor such as carbon-containing resin and the like. Thus, the fuel-electrode-side cell frame 7 can function as a negative electrode side terminal. Therefore, in the fuel cell 1, if wiring 101 is connected to the fuel-electrode-side cell frame 7, the wiring 101 becomes conducted with the fuel electrode 4.

The oxygen-electrode-side cell frame 8 has a shape same as that of the fuel-electrode-side cell frame 7. In the fuel cell 1, grooves 82 formed on the oxygen-electrode-side cell frame 8 constitute flow paths 81 for air. Through these flow paths 81**,** air is supplied to the oxygen electrode 5. At the side where the grooves 82 are formed, portions of the surface that is not contributing to forming the grooves 82 are in contact with the oxygen electrode 5 (more specifically, the oxygen-electrode-outside water-repellent-material-containing layer 522). In addition, the oxygen-electrode-side cell frame 8 is made of, for example, a material same as that of the fuel-electrode-side cell frame 7. Thus, the oxygen-electrode-side cell frame 8 can function as a positive electrode side terminal. Therefore, in the fuel cell 1, if wiring 102 is connected to the oxygen-electrode-side cell frame 8, the wiring 102 becomes conducted with the oxygen electrode 5.

In the fuel cell 1 shown in FIG. 1, the fuel-electrode-side cell frame 7 and the oxygen-electrode-side cell frame 8 are arranged as the grooves 72 and the grooves 82 are almost orthogonal to each other. Therefore, in the fuel cell 1 shown in FIG. 1, the flow paths 71 and the flow paths 81 are in a positional relation such that they are almost orthogonal to each other. Thereby, constitution and arrangement of components for supplying hydrogen and air can be simplified. In FIG. 1, the flow paths 71 extend in a vertical direction to the drawing surface, and the flow paths 81 extend in the up-and-down direction in FIG. 1.

The grooves 72 and the grooves 82 may not be put orthogonal to each other.

If such cell frames are attached to the layered body 29, assembly of the fuel cell 1, wiring, and supply of fuel and air become easy. -

The cell frames may not be provided.

### (6) Action of the fuel cell 1

Hereinafter, the action of the fuel cell 1 is described. In the following description, the action is explained in a model-like manner to make explanation plain.

First, one end of the wiring 101 is connected to the fuel-electrode-side cell frame 7, and one end of the wiring 102 is connected to the oxygen-electrode-side cell frame 8. Furthermore, the other ends of the wiring 101 and the wiring 102 are connected to a load 109.

Then, hydrogen gas is sent to the flow paths 71, and air is sent to the flow paths 81. Furthermore, liquid water (refrigerant) is sent to the flow paths 81. At this time, in FIG. 1, the hydrogen gas flows in a vertical direction to the drawing surface, and the air and water flow in an up-and-down direction in FIG. 1. In this case, the amount of water supply should be set preferably in a range of about 0.1 to 1.0 mg/cm²·sec though not particularly limited.

It is preferable that the hydrogen gas be supplied under pressure. Thereby, efficiency of hydrogen gas utilization is enhanced. In this case, the supply pressure of the hydrogen gas should be set preferably in a range of about 0.5 to 1 kgf/cm². Hydrogen gas may not be supplied under pressure.

When the hydrogen gas is sent to the flow paths 71, the hydrogen is supplied to the surface of the fuel electrode 4. Then, the hydrogen enters the fuel-diffusion layer 42 from the fuel-electrode-outside water-repellent-material-containing layer 422. Then, the hydrogen passes through the fuel-diffusion layer 42 (the fuel-electrode-outside water-repellent-material-containing layer 422, the fuel-diffusion-layer core portion 421, and the fuel-electrode-inside water-repellent-material-containing layer 423), being diffused in the fuel-diffusion layer 42**,** and reaches the fuel-reactive layer 41**.**

When the air is sent to the flow paths 81, oxygen is supplied to the surface of the oxygen electrode 5. Then, the oxygen enters the oxygen-diffusion layer 52 from the oxygen-electrode-outside water-repellent-material-containing layer 522. Then, the oxygen passes through the oxygen-diffusion layer 52 (the oxygen-electrode-outside water-repellent-material-containing layer 522, the oxygen-diffusion-layer core portion 521, and the oxygen-electrode-inside water-repellent-material-containing layer 523), being diffused in the oxygen-diffusion layer 52, and reaches the oxygen-reactive layer 51.

When the liquid water is sent to the flow paths 81, it reaches the surface of the oxygen electrode 5, but it is basically prevented from entering the oxygen electrode 5. The reason is that since the water molecules flowing in the flow paths 81 are in the form of large aggregates (so-called large clusters), it is difficult for the water to pass through the oxygen-electrode-outside water-repellent-material-containing layer 522 that has water repellency.

In the fuel cell 1 of the present invention, the layer containing the water-repellent material (oxygen-electrode-outside water-repellent-material-containing layer 522) is provided at the surface portion of the electrode (oxygen electrode 5) to which water is supplied. Therefore, in the fuel cell 1, a large amount of water is apt to not adhere to the surface of the oxygen electrode 5**.** Thus, in the fuel cell 1 of the present invention, the oxygen can easily enter the oxygen electrode 5**.**

When the hydrogen (H₂) is supplied to the fuel-reactive layer 41, following reaction occurs in the fuel-reactive layer 41 by the action of the catalyst.

H₂ → 2H⁺ + 2e⁻ (i)

At this time, electrons (e⁻) generated in the fuel-reactive layer 41 move from the fuel-reactive layer 41 into the oxygen-reactive layer 51 through the fuel-diffusion layer 42, the fuel-electrode-side cell frame 7, the wiring 101, the load 109, the wiring 102, the oxygen-electrode-side cell frame 8, and the oxygen-diffusion layer 52. During this process, the electrons work at the load 109.

Furthermore, hydrogen ions (H⁺) generated in the fuel-reactive layer 41 move from the fuel-reactive layer 41 into the oxygen-reactive layer 51 through the electrolyte layer 3.

In the oxygen-reactive layer 51, from the oxygen (O₂) supplied from the flow paths 81, the electrons having passed through the wirings, and the hydrogen ions having moved through the electrolyte layer 3, following reaction occurs by the action of the catalyst.

(1/2)O₂ + 2H⁺ + 2e⁻ → H₂O (ii)

At this time, due to the difference of water pressures in the oxygen-reactive layer 51 and the oxygen-diffusion layer 52**,** a capillary action, and etc., much of the generated water (H₂O) moves from the oxygen-reactive layer 51 through the oxygen-diffusion layer 52 and is discharged on the surface of the oxygen electrode 5 (the surface of the oxygen-electrode-outside water-repellent-material-containing layer 522). In this case, since watermolecules passing through the oxygen-diffusion layer 52 do not form aggregates, or, alternatively, even if the water molecules form aggregates, their size is small, they can pass through the oxygen-electrode-inside water-repellent-material-containing layer 523 and the oxygen-electrode-outside water-repellent-material-containing layer 522 smoothly.

Going back slightly, referred to the above-mentioned equation (i), the hydrogen ions generated in the fuel-reactive layer 41 move from the fuel-reactive layer 41 into the oxygen-reactive layer 51 through the electrolyte layer 3. At this time, the hydrogen ions migrate accompanying with water molecules. Therefore, in the fuel-reactive layer 41, the amount of water tends to decrease. However, when the amount of water in the fuel-reactive layer 41 decreases to some degree, the water begins to move back from the oxygen-reactive layer 51 into the fuel-reactive layer 41 due to the water concentration difference between the oxygen-reactive layer 51 and the fuel-reactive layer 41. In addition, in the fuel cell 1 of the present invention, the water in the fuel-reactive layer 41 is apt to not be diffused into the fuel-diffusion layer 42. Thus, in the fuel-reactive layer 41, the amount of water is prevented from being largely decreased.

Consequently, because of the above-mentioned action, in the fuel cell 1, the amount of water in the oxygen-reactive layer 51 is apt to not become too large, and the amount of water in the fuel-reactive layer 41 is apt to not become too small. Therefore, the fuel cell 1 can generate electricity efficiently, and enables its cell output to be augmented.

Due to the reactions shown in the above-mentioned equations (i) and (ii), the layered body 29 as well as the reactive portion 21 becomes hot, but the layered body 29 is efficiently cooled by the water supplied to the flow paths 81.

In the above description, although the water is supplied to the oxygen electrode 5, water may be supplied to the fuel electrode 4. Furthermore, water may not be supplied to the fuel cell 1.

In the above description, although the air is supplied to the oxygen electrode 5, gas other than the air, such as pure oxygen gas, may be supplied to the oxygen electrode 5 as long as the gas contains oxygen molecules.

### (7) Method of producing the fuel cell 1

The layered body 29 of the above-mentioned fuel cell 1 can be produced, for example, by the process of preparing the electrolyte layer 3, laminating the fuel electrode 4 on one surface of the electrolyte layer 3, and laminating the oxygen electrode 5 on the other surface of it.

### (7.1) Producing the fuel electrode 4

Hereinafter, an example of a method of producing the fuel electrode 4 is described.

First, the fuel-diffusion-layer core portion 421 is prepared.

Next, the fuel-diffusion layer 42 is obtained by the process of forming the fuel-electrode-outside water-repellent-material-containing layer 422 and the fuel-electrode-inside water-repellent-material-containing layer 423 on both surfaces of the fuel-diffusion-layer core portion 421, respectively. The water-repellent-material-containing layers can be formed, for example, by the process of coating constituent materials of the water-repellent-material-containing layer on the fuel-diffusion-layer core portion 421, followed by drying them, and applying heat and pressure to this fuel-diffusion-layer core portion 421. In this case, the heating temperature should be set preferably in a range of about 330 to 400 QC though not particularly limited. Furthermore, the applied pressure should be set preferably in a range of about 20 to 100 kg/cm² though not particularly limited

Next, the fuel-reactive layer 41 is formed on the fuel-electrode-inside water-repellent-material-containing layer 423 so as to obtain the fuel electrode 4. The fuel-reactive layer 41 can be formed, for example, by the process of coating constituent materials of the fuel-reactive layer 41 on the fuel-electrode-inside water-repellent-material-containing layer 423, followed by drying them.

### (7.2) Producing the oxygen electrode 5

The oxygen electrode 5 can be produced by the same method as that for the fuel electrode 4.

### (7.3) Producing the layered body 29

The layered body (layered unit) 29 can be produced by the process of laminating the fuel electrode 4 on one surface of the electrolyte layer 3 and laminating the oxygen electrode 5 on the other surface of the electrolyte layer 3 as the fuel-reactive layer 41 comes into contact with the electrolyte layer 3 and the oxygen-reactive layer 51 comes into contact with the electrolyte layer 3.

For example, the fuel electrode 4, the electrolyte layer 3, and the oxygen electrode 5 are laminated to one another by the process of stacking the fuel electrode 4, the electrolyte layer 3**,** and the oxygen electrode 5, as each layer is disposed in the order described above, and applying heat and pressure to this stacked stuff.

In this case, the heating temperature should be set preferably in a range of about 120 to 180 ºC though not particularly limited. Furthermore, the applied pressure should be set preferably in a range of about 20 to 100 kg/cm² though not particularly limited.

### (7.4)

Thereafter, the fuel cell 1 as shown in FIG. 1 can be obtained by pinching the layered body 29 (fuel electrode 4 and the oxygen electrode 5) between the fuel-electrode-side cell frame 7 and the oxygen-electrode-side cell frame 8.

Up to here, the fuel cell of the present invention has been described based on the embodiment referred to the drawing, but the present invention is not limited therein.

For example, in the fuel-diffusion layer, the water-repellent-material-containing layer may be provided only on one surface of the fuel-diffusion layer. Furthermore, for example, in the oxygen-diffusion layer, the water-repellent-material-containing layer may be provided only on one surface of the oxygen-diffusion layer.

In the above-mentioned embodiment, hydrogen is used as fuel, but, for example, methanol, hydrazine, and the like may be used as fuel.

### (8) Fuel cell device

Hereinafter, a fuel cell device (fuel cell machine) employing the fuel cell 1 is described.

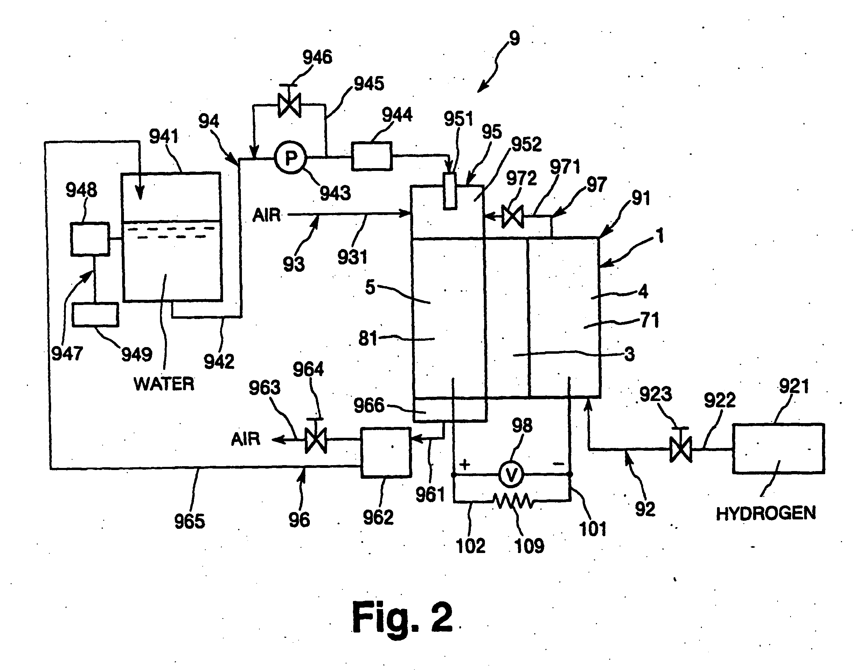

FIG. 2 is a circuit diagram showing an embodiment of a fuel cell device according to the present invention.

A fuel cell device 9 shown in FIG. 2 is equipped with the fuel cell 1 described above. This fuel cell device 9 can generate electricity by supplying fuel and oxygen to the fuel cell 1. Hereinafter, the fuel cell device 9 is described more specifically.

As shown in FIG. 2, the fuel cell device 9 has a cell unit 91 accommodating the fuel cell 1, fuel supply means 92 for supplying hydrogen (fuel) to the fuel electrode 4 of the fuel cell 1, oxygen supply means 93 for supplying air (gas containing oxygen gas) to the oxygen electrode 5 of the fuel cell 1, water supply means 94 for supplying water to the oxygen electrode 5, gas-liquid mixing means (gas-liquid supply means) 95 for mixing air and water to be supplied to the oxygen electrode 5, regeneration means 96 for regenerating water supplied to the fuel cell 1, fuel exhaust means 97 for exhausting hydrogen supplied to the fuel electrode 4, and an output meter 98 for detecting and displaying the cell output of the fuel cell 1.

The cell unit 91 accommodates at least one fuel cell 1.

The fuel supply means (fuel supply line) 92 has a fuel source 921 for reserving hydrogen, a pipe 922 whose one end is connected to the flow paths 71 of the fuel cell 1 and whose other end is connected to the fuel source 921, and a valve 923 disposed on the pipe 922. The fuel source 921 is composed of, for example, a cylinder.

The oxygen supply means (oxygen supply line) 93 has a pipe 931 whose one end is connected to the gas-liquid mixing means 95 and whose other end is open to the atmosphere.

The water supply means (water supply line) 94 has a tank 941 for reserving water, a pipe 942 whose one end is connected to the gas-liquid mixing means 95 and whose other end is connected to the tank 941, a pump 943 disposed on the pipe 942, a hydraulic sensor 944 disposed on the pipe 942 on a downstream side of the pump 943, a bypass line 945 branched from the pipe 942 whose one end is connected to a downstream side of the pump 943 and whose other end is connected to an upstream side of the pump 943, a valve 946 disposed on the bypass line 945, and water level detecting means 947 disposed on and connected to the tank 941. The water level detecting means 947 has a function of detecting and monitoring the level of water reserved in the tank 941, and has a water level sensor 948 for detecting the level of water reserved in the tank 941, and an alarm 949 connected to the water level sensor 948.

The gas-liquid mixing means 95 has a nozzle 951 to which one end of the pipe 942 is connected, and a space (gas-liquid supply chamber) 952 communicating with the flow paths 81 of the fuel cell 1. The pipe 931 of the oxygen supply means 93 communicates with the space 952.

The regeneration means (regeneration line) 96 has a manifold (lower manifold) 966 for collecting the water that has passed through the flow paths 81, a regeneration unit (condenser for condensing water in air) 962 for separating the water and air that have passed through the flow paths 81, a pipe 961 whose one end is connected to the manifold 966 and whose other end is connected to the regeneration unit 962, an exhaust line 963 whose one end is connected to the regeneration unit 962 and whose other end is open to the atmosphere, a valve 964 disposed on the exhaust line 963, and a pipe 965 whose one end is connected to the regeneration unit 962 and whose other end is connected to the tank 941.

The fuel exhaust means (fuel exhaust line) 97 has a pipe 971 whose one end is connected to the flow paths 71 and whose other end communicates with the space 952, and a valve 972 disposed on the pipe 971.

The above-mentioned constitution of the fuel cell device 9 is optimum to operate the above-mentioned fuel cell 1.

The fuel source of the fuel supply means can also be composed of, for example, a cylinder equipped with a hydrogen-storing alloy or the like. In this case, the fuel cell device should have a configuration in which the fuel source of the fuel supply means is integrated with the regeneration unit of the regeneration means. Thereby, the hydrogen-storing alloy of the fuel source can be heated by the air (air which contains water) exhausted from the flow paths 81. In the fuel cell device equipped with the hydrogen-storing alloy in its fuel source, if the hydrogen-storing alloy of the fuel source can be heated by the air exhausted from the flow paths 81, the hydrogen can be supplied more smoothly from the hydrogen-storing alloy to the fuel cell 1. In addition, thereby, the air exhausted from the flow paths 81 is cooled, and the water and air that have passed through the flow paths 81 can be more efficiently separated from each other.

The fuel supply means may have a configuration, for example, in which methanol is reserved in the fuel source, this methanol is decomposed so as to generate hydrogen, and this hydrogen is supplied to the fuel electrode.

### (9) Operation of the fuel cell device 9

Hereinafter, the operation of the fuel cell device 9 is described.

First, the pump 943 is run. Furthermore, the valve 923 is opened at a certain opening. Moreover, the valve 964 is opened at a certain opening.

When the valve 923 is opened at a certain opening, hydrogen is supplied from the fuel source 921 to the flow paths 71 through the pipe 922.

When the pump 943 is run, water in the tank 941 is supplied to the nozzle 951 through the pipe 942. At this time, water-supply pressure is detected by the hydraulic sensor 944. In the case where the water-supply pressure is high, an operator can adjust the water-supply pressure by lowering the power of the pump 943. The operator can also adjust the water-supply pressure by opening the valve 946 at a certain opening and making the water partially circulate between the bypass line 945 and the pipe 951.

The water supplied to the nozzle 951 is sprayed into the space 952 from the nozzle 951, and becomes atomized (particular).

Air is supplied from the pipe 931 into the space 952.

The water sprayed from the nozzle 951 and the air supplied from the pipe 931 are mixed in the space 952. The mixed water and air are supplied to the flow paths 81.

Then, the fuel cell 1 generates electricity in the cell unit 91, using the hydrogen supplied by the fuel supply means 92 and the air supplied by the oxygen supply means 93.

The state of its cell output at this time is displayed on the output meter 98.

The fuel cell 1 is efficiently cooled by the water supplied by the water supply means 94**.**

The water and air that have passed through the fuel cell 1 (flow paths 81) are collected by the manifold 966.

These water and air pass through the pipe 961 and flow into the regeneration unit 962.

In the regeneration unit 962, the water is separated from the air.

Furthermore, in the regeneration unit 962, hydrogen contained in the air exhausted from the fuel cell 1 is removed.

The air from which the hydrogen has been removed is exhausted from the exhaust line 963.

The water in the regeneration unit 962 passes through the pipe 965 and flows into the tank 941. Thereby, the water supplied to the fuel cell 1 is reused, and, as a result, the water is used effectively. Furthermore, by the above-mentioned configuration of the fuel cell device 9, the water generated in the oxygen-reactive layer 51 due to electricity generation and exhausted from the oxygen electrode 5 can also be effectively used as cooling water.

In the fuel cell device 9, the level of water reserved in the tank 941 is being detected by the water level sensor 948. In the case where the level of water in the tank 941 becomes a predetermined value or higher, the alarm 949 warns. Therefore, the fuel cell device 9 can generate electricity more safely and reassuringly.

In the case of finishing generating electricity, the operation of the pump 943 is terminated, and the valve 923 and the valve 964 are closed. Thereby, the operation of the fuel cell device 9 is stopped. Thereafter, the pressure in the flow paths 71 may be released by opening the valve 972. This action further enhances the safety of the fuel cell device 9**.**

As described above, if the fuel cell 1 has the configuration in which water is supplied to the oxygen electrode 5, the constitution of the fuel cell device 9 is simplified. In addition, handling and safety of the fuel cell device 9 are improved.

Since the above-described fuel cell device 9 has the fuel cell 1 mentioned above, it can generate electricity more efficiently so that it can gain a high output.

### EXAMPLES

In the present specification, "wt%" means % by mass.

### (Example 1)

A fuel cell with the constituent described below was produced. In this fuel cell, the water repellency of its fuel-diffusion layer was set higher than that of its oxygen-diffusion layer.

### < Constitution of the fuel cell >

### « Constituent of the fuel electrode »

### ---- Fuel-diffusion layer ----

- Fuel-diffusion-layer core portion
   - Constituent material: Carbon cloth
   - Thickness: 360 µm
- Fuel-electrode-inside water-repellent-material-containing layer
   - Constituent material: (i) Carbon powder (average particle diameter 0.03 µm; "Denka Black" produced by Denki Kagaku Kogyo Co., Ltd.) 50 wt%; (ii) Polytetrafluoroethylene 50 wt% (The polytetrafluoroethylene was carried by (mixed with) the carbon powder)
   - Thickness: 30 µm
- Fuel-electrode-outside water-repellent-material-containing layer
   - Constituent material: (i) Carbon powder (average particle diameter 0.03 µm; "Denka Black" produced by Denki Kagaku Kogyo Co., Ltd.) 50 wt%; (ii) Polytetrafluoroethylene 50 wt% (The polytetrafluoroethylene was carried by the carbon powder)
   - Thickness: 30 µm

### ---- Fuel-reactive layer ----

- Constituent material: (i) Platinum catalyst (Pt 100 at %, average particle diameter 2 nm, specific surface area 100 m²/g) 35 wt%; (ii) Carbon powder (average particle diameter 0.03 µm) 35 wt%; (iii) Nafion (produced by Aldrich Corporation, Nafion shown below was same as this unless specified otherwise) 30 wt% (The platinum catalyst is carried by the carbon powder)
- Thickness: 20 µm

### « Constituent of an electrolyte layer »

- Constituent material: Nafion 112 (produced by Du Pont Corporation)
- Thickness: 50 µm

### « Constituent of an oxygen electrode »

### ---- Oxygen-diffusion layer ----

- Oxygen-diffusion-layer core portion
   - Constituent material: Carbon cloth
   - Thickness: 360 µm
- Oxygen-electrode-inside
   water-repellent-material-containing layer
   - Constituent material: (i) Carbon powder (average - particle diameter 0.03 µm; "Denka Black" produced by Denki Kagaku Kogyo Co., Ltd.) 65 wt%; (ii) Polytetrafluoroethylene 35 wt% (The polytetrafluoroethylene was carried by the carbon powder)
   - Thickness: 20 µm
- Oxygen-electrode-outside
   water-repellent-material-containing layer
   - Constituent material: (i) Carbon powder (average particle diameter 0.03 µm; "Denka Black" produced by Denki Kagaku Kogyo Co., Ltd.) 65 wt%; (ii) Polytetrafluoroethylene 35 wt% (The polytetrafluoroethylene was carried by the carbon powder)
   - Thickness: 20 µm

### ---- Oxygen-reactive layer ----

- Constituent material: (i) Platinum catalyst (Pt 100 at %, average particle diameter 2 nm, specific surface area 100m²/g) 35 wt%; (ii) Carbon powder (average particle diameter 0.03 µm) 35 wt% (The platinum catalyst was carried by the carbon powder); (iii) Nafion 30 wt%
- Thickness: 20 µm

The fuel electrode was produced by following processes. First, carbon powder and polytetrafluoroethylene were mixed and dispersed in ethyl acetate (dispersion medium; dispersion media below are same as this) in the composition ratio described above. Then, the mixed dispersion liquid was coated on both surfaces of carbon cloth (fuel-diffusion-layer core portion), followed by drying it. Then, this carbon cloth was hot-pressed under the condition of 360 ºC and 60 kg/cm². Thereby, the fuel-diffusion layer with the above-mentioned thickness was obtained. Next, a mixed dispersion medium, which was obtained by mixing and dispersing a platinum catalyst, carbon powder, and Nafion in the above-mentioned composition ratio, was coated on one surface of the fuel-diffusion layer (on one water-repellent-material-containing layer), followed by drying it. Thereby, the fuel-reactive layer with the above-mentioned thickness was formed on the fuel-diffusion layer. In other words, the fuel electrode with the above-mentioned constitution and constituent was obtained.

By doing a similar manner, an oxygen electrode with the above-described constitution and constituent was obtained.

Next, the fuel electrode, the electrolyte layer, and the oxygen electrode were stacked on top of the other as their layers were situated in following order: 'fuel-diffusion layer /fuel-reactive layer / electrolyte layer / oxygen-reactive layer / oxygen-diffusion layer'. Then, the stacked stuff was hot-pressed under the condition of 130 ºC and 40 kg/cm². Thereby, the layered body (substantial fuel cell) was obtained.

In the obtained fuel-diffusion layer, the water contact angle (average of those on its both surfaces) on the surface of the fuel-diffusion layer was 150°. The porosity of the fuel-electrode-inside water-repellent-material-containing layer was 45%. The porosity of the fuel-electrode-outside water-repellent-material-containing layer was 45%.

In the obtained oxygen-diffusion layer, the water contact angle (average of those on its both surfaces) on the surface of the oxygen-diffusion layer was 150°. The porosity of the oxygen-electrode-inside water-repellent-material-containing layer was 55%. The porosity of the oxygen-electrode-outside water-repellent-material-containing layer was 55%.

### (Example 2)

A fuel cell same as that of Example 1 except the shown below was produced by the same way described above. In this fuel cell, the water repellency of its fuel-diffusion layer was set higher than that of its oxygen-diffusion layer.

### « Constituent of the fuel electrode »

### ---- Fuel-diffusion layer ----

- Fuel-electrode-inside water-repellent-material-containing layer
   - Constituent material: (i) Carbon powder (average particle diameter 0.03 µm; "Denka Black" produced by Denki Kagaku Kogyo Co., Ltd.) 50 wt%; (ii) Polytetrafluoroethylene 50 wt% (The polytetrafluoroethylene was carried by the carbon powder)
   - Thickness: 30 µm
- Fuel-electrode-outside water-repellent-material-containing layer
   - Constituent material: (i) Carbon powder (average particle diameter 0.03 µm; "Denka Black" produced by Denki Kagaku Kogyo Co., Ltd.) 50 wt%; (ii) Polytetrafluoroethylene 50 wt% (The polytetrafluoroethylene was carried by the carbon powder)
   - Thickness: 30 µm

### « Constituent of an oxygen electrode »

### ---- Oxygen-diffusion layer ----

- Oxygen-electrode-inside
   water-repellent-material-containing layer
   - Constituent material: (i) Carbon powder (average particle diameter 0.03 µm: "Vulcan XC-72" produced by Cabot Corporation) 60 wt%; (ii) Polytetrafluoroethylene 40 wt% (The polytetrafluoroethylene was carried by the carbon powder)
   - Thickness: 30 µm
- Oxygen-electrode-outside
   water-repellent-material-containing layer
   - Constituent material: (i) Carbon powder (average particle diameter 0.03 µm; "Vulcan XC-72" produced by Cabot Corporation) 60 wt%; (ii) Polytetrafluoroethylene 40 wt% (The polytetrafluoroethylene was carried by the carbon powder)
   - Thickness: 30 µm

As supplemental remarks, in the present example, the inventers of the present invention used the carbon powder ("Denka Black" produced by Denki Kagaku Kogyo Co., Ltd.) for the fuel-electrode-inside water-repellent-material-containing layer and the fuel-electrode-outside water-repellent-material-containing layer, whose water repellency was higher than that of the carbon powder ("Vulcan XC-72" produced by Cabot Corporation) for the oxygen-electrode-inside water-repellent-material-containing layer and the oxygen-electrode-outside water-repellent-material-containing layer.

In the obtained fuel-diffusion layer, the water contact angle (average of those on its both surfaces) on the surface of the fuel-diffusion layer was 150°. The porosity of the fuel-electrode-inside water-repellent-material-containing layer was. 45%. The porosity of the fuel-electrode-outside water-repellent-material-containing layer was 45%.

In the obtained oxygen-diffusion layer, the water contact angle (average of those on its both surfaces) on the surface of the oxygen-diffusion layer was 130°. The porosity of the oxygen-electrode-inside water-repellent-material-containing layer was 55%. The porosity of the oxygen-electrode-outside water-repellent-material-containing layer was 55%.

### (Comparative Example)

A fuel cell same as that of Example 1 except the shown below was produced by the same way described above. In this fuel cell, the water repellency of the fuel-diffusion layer and that of the oxygen-diffusion layer were set equal to each other.

### « Constituent of the fuel electrode »

### ---- Fuel-diffusion layer ----

- Fuel-electrode-inside water-repellent-material-containing layer
   - Constituent material: (i) Carbon powder 65 wt%; (ii) Polytetrafluoroethylene 35 wt%
   - Thickness: 30 µm
- Fuel-electrode-outside water-repellent-material-containing layer
   - Constituent material: (i) Carbon powder 65 wt%; (ii) Polytetrafluoroethylene 35 wt%
   - Thickness: 30 µm

### « Constituent of the oxygen electrode »

### ---- Oxygen-diffusion layer ----

- Oxygen-electrode-inside
   water-repellent-material-containing layer
   - Constituent material: (i) Carbon powder 65 wt%; (ii) Polytetrafluoroethylene 35 wt%
   - Thickness: 30 µm
- Oxygen-electrode-outside
   water-repellent-material-containing layer
   - Constituent material: (i) Carbon powder 65 wt%; (ii) Polytetrafluoroethylene 35 wt%
   - Thickness: 30 µm

### (Evaluation)

Cell frames (a fuel-electrode-side cell frame and an oxygen-electrode-side cell frame) were fixed on the layered body that was obtained in each of the examples and comparative example so that the fuel cell was assembled individually.

Next, two fuel cells were set in a cell unit in parallel. Then the cell unit was installed in a fuel cell device as shown in FIG. 2. More specifically, each fuel cell device equipped with the fuel cells obtained in each example (or comparative example) was obtained.

Next, the fuel cell devices were operated under the conditions that the supply pressure of hydrogen gas was 0.9 kgf/cm² and the amount of water supply to the oxygen electrodes was 0.66 mg/cm²•sec so that they generated electricity.

Then, the current density - voltage relations (characteristics) of the fuel cells obtained in each of the examples and comparative example were measured.

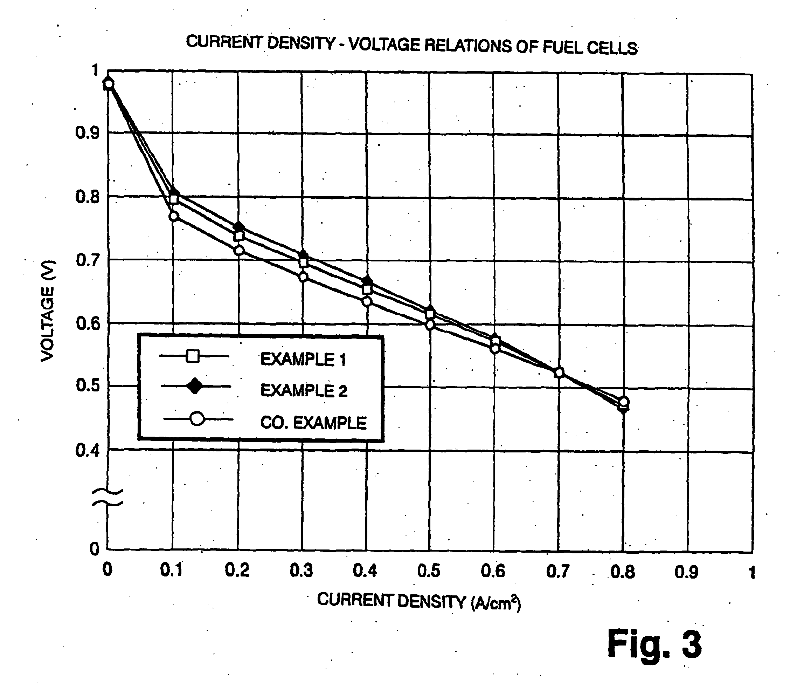

FIG. 3 shows the results.

As shown in FIG. 3, the current densities of the fuel cells of the present examples were higher than that of the fuel cell of the comparative example in a usual operating voltage range of fuel cells.

It was confirmed from the above results that the fuel cells of the present examples enabled high cell outputs to be obtained.

As described above, according to the present inventions, cell outputs of fuel cells can be enhanced.

Thus, according to the present inventions, fuel cells and fuel cell devices, which bring high cell outputs, can be provided.

## Claims

1. A fuel cell (1), comprising:
a fuel electrode (4) having a fuel-diffusion layer (42) for diffusing fuel and a fuel-reactive layer (41) for reaction of the fuel, said fuel-reactive layer (41) having an outer surface contacting the fuel diffusion layer (42),
an oxygen electrode (5) including an oxygen-diffusion layer (52) for diffusing oxygen and an oxygen-reactive layer (51) for reaction of the oxygen, said oxygen-reactive layer (51) having an outer surface contacting the oxygen-diffusion layer (52), and
an electrolyte layer (3), said fuel-reactive layer (41) arranged between said electrolyte layer (3) and said fuel-diffusion layer (42) and said oxygen-reactive layer (51) arranged between said electrolyte layer (3) and said oxygen-diffusion layer (52),
wherein the fuel-diffusion layer (42) contains a material having water repellency, and the oxygen-diffusion layer (52) contains a material having water-repellency, wherein said oxygen-diffusion layer (52) has less water repellency than said fuel-diffusion layer (42), and wherein each of the fuel-diffusion layer (42) and the oxygen-diffusion layer (52) is formed of plural sublayers, one of which contains the water-repellent material.

2. The fuel cell as claimed in Claim 1, wherein the content of the waster-repellent material in the fuel-diffusion layer (42) is larger than that of the water-repellent material in the oxygen-diffusion layer (52).

3. The fuel cell as claimed in Claim 1, wherein the content of the water-repellent material in the fuel-diffusion layer (42) is larger than that of the water-repellent material in the oxygen-diffusion layer (52) by at least 5 wt%.

4. The fuel cell as claimed in Claim 1, wherein the content of the water-repellent material in the fuel-diffusion layer (42) is 20 to 80 wt%.

5. The fuel cell as claimed in Claim 1, wherein the content of the water-repellent material in the oxygen-diffusion layer (52) is 15 to 65 wt%.

6. The fuel cell as claimed in Claim 1, wherein the sublayers containing the water-repellent material in the fuel-diffusion layer (42) and in the oxygen-diffusion layer (52) contain an electrically conductive material, and wherein the electrically conductive material in the fuel-diffusion layer (42) as higher water-repellency than that of the electrically conductive material in the oxygen-diffusion layer (52).

7. The fuel cell as claimed in Claim 1, wherein the water-repellent material is carried by a particulate electrically conductive material.

8. The fuel cell as claimed in Claim 1, wherein the fuel-diffusion layer (42) has water-repellent-material-containing sublayers at both its sides.

9. The fuel cell as claimed in Claim 1, wherein the oxygen-diffusion layer (52) has the water-repellent-material-containing sublayers at both its sides.

10. The fuel cell as claimed in Claim 1, wherein the water contact angle on the surface of the fuel-diffusion layer (42) is larger than the water contact angle on the surface of the oxygen-diffusion layer (52) by at least 5°.

11. The fuel cell as claimed in Claim 1, wherein the water contact angle on the surface of the fuel-diffusion layer (42) is 100 to 160°.

12. The fuel cell as claimed in Claim 1, wherein the water contact angle on the surface of the oxygen-diffusion layer (52) is 90 to 150°.

13. The fuel cell as claimed in Claim 1, wherein the fuel cell uses hydrogen as fuel.

14. The fuel cell (1) as claimed in claim 1, wherein the fuel cell (1) is part of a fuel cell device (9) including
fuel supply means (92) for supplying fuel to the fuel electrode (4); and
oxygen supply means (93) for supplying gas containing oxygen gas to the oxygen electrode (5).

15. The fuel cell as claimed in Claim 14, wherein the fuel cell device (9) further comprises water supply means (94) for supplying water to the oxygen electrode (5).

16. The fuel cell as claimed in claim 1 wherein said fuel-reactive layer (41) contains a catalyst that promotes hydrogen oxidation and wherein said oxygen-reactive layer (51) contains a catalyst that promotes oxygen reduction.

17. The fuel cell device as claimed in claim 14 wherein said fuel-reactive layer (41) contains a catalyst that promotes hydrogen oxidation and wherein said oxygen-reactive layer (51) contains a catalyst that promotes oxygen reduction.

## Patentansprüche

1. Brennstoffzelle (1), aufweisend:
eine Brennstoffelektrode (4) mit einer Brennstoff-Diffusionsschicht (42) für die Diffusion von Brennstoff und eine Brennstoff-reaktive Schicht (41) für die Reaktion des Brennstoffs, wobei die Brennstoff-reaktive Schicht (41) eine Außenoberfläche in Kontakt mit der Brennstoff-Diffusionsschicht (42) besitzt,
eine Sauerstoffelektrode (5) mit einer Sauerstoff-Diffusionsschicht (52) für die Diffusion von Sauerstoff und einer Sauerstoff-reaktiven Schicht (51) für die Reaktion des Sauerstoffs, wobei die Sauerstoff-reaktive Schicht (51) eine Außenoberfläche in Kontakt mit der Sauerstoff-Diffusionsschicht (52) besitzt, und
eine Elektrolytschicht (3), wobei die Brennstoff-reaktive Schicht (41) zwischen der Elektrolytschicht (3) und der Brennstoff-Diffusionsschicht (42) angeordnet ist und die Sauerstoff-reaktive Schicht (51) zwischen der Elektrolytschicht (3) und der Sauerstoff-Diffusionsschicht (52) angeordnet ist,
wobei die Brennstoff-Diffusionsschicht (42) ein Material mit Wasserabstoßungseigenschaft enthält, und die Sauerstoff-Diffusionsschicht (52) ein Material mit Wasserabstoßungseigenschaft enthält, wobei die Sauerstoff-Diffusionsschicht (52) eine geringere Wasserabstoßung als die Brennstoff-Diffusionsschicht (42) aufweist, und wobei sowohl die Brennstoff-Diffusionsschicht (42) als auch die Sauerstoff-Diffusionsschicht (52) aus mehreren Unterschichten aufgebaut ist, wovon eine das wasserabstoßende Material enthält.

2. Brennstoffzelle nach Anspruch 1, wobei der Anteil des wasserabstoßenden Materials in der Brennstoff-Diffusionsschicht (42) größer als der des wasserabstoßenden Materials in der Sauerstoff-Diffusionsschicht (52) ist.

3. Brennstoffzelle nach Anspruch 1, wobei der Anteil des wasserabstoßenden Materials in der Brennstoff-Diffusionsschicht (42) um wenigstens 5 Gewichtsprozent größer als der des wasserabstoßenden Materials in der Sauerstoff-Diffusionsschicht (52) ist.

4. Brennstoffzelle nach Anspruch 1, wobei der Anteil des wasserabstoßenden Materials der Brennstoff-Diffusionsschicht (42) 20 bis 80 Gewichtsprozent ist.

5. Brennstoffzelle nach Anspruch 1, wobei der Anteil des wasserabstoßenden Materials der Sauerstoff-Diffusionsschicht (52) 15 bis 65 Gewichtsprozent ist.

6. Brennstoffzelle nach Anspruch 1, wobei die das wasserabstoßende Material enthaltenden Unterschichten in der Brennstoff-Diffusionsschicht (42) und in der Sauerstoff-Diffusionsschicht (52) ein elektrisch leitendes Material enthalten, und wobei das elektrisch leitende Material in der Brennstoff-Diffusionsschicht (42) eine höhere Wasserabstoßung als das elektrisch leitende Material in der Sauerstoff-Diffusionsschicht (52) hat.

7. Brennstoffzelle nach Anspruch 1, wobei das wasserabstoβende Material von einem partikulären elektrisch leitenden Material getragen wird.

8. Brennstoffzelle nach Anspruch 1, wobei die Brennstoff-Diffusionsschicht (42) die das wasserabstoßende Material enthaltenden Unterschichten auf ihren beiden Seiten aufweist.

9. Brennstoffzelle nach Anspruch 1, wobei die Sauerstoff-Diffusionsschicht (52) die das wasserabstoßende Material enthaltenden Unterschichten auf ihren beiden Seiten aufweist.

10. Brennstoffzelle nach Anspruch 1, wobei der Wasserkontaktwinkel auf der Oberfläche der Brennstoff-Diffusionsschicht (42) um mindestens 5° größer als der Wasserkontaktwinkel auf der Oberfläche der Sauerstoff-Diffusionsschicht (52) ist.

11. Brennstoffzelle nach Anspruch 1, wobei der Wasserkontaktwinkel auf der Oberfläche der Brennstoff-Diffusionsschicht (42) 100 bis 160° ist.

12. Brennstoffzelle nach Anspruch 1, wobei der Wasserkontaktwinkel auf der Oberfläche der Sauerstoff-Diffusionsschicht (52) 90 bis 150° ist.

13. Brennstoffzelle nach Anspruch 1, wobei die Brennstoffzelle Wasserstoff als Brennstoff verwendet.

14. Brennstoffzelle (1) nach Anspruch 1, wobei die Brennstoffzelle (1) Teil einer Brennstoffzellenvorrichtung (9) ist, die enthält:
eine Brennstoffzuführungseinrichtung (92) zum Zuführen von Brennstoff zu der Brennstoffelektrode (4); und
eine Sauerstoffzuführungseinrichtung (93) zum Zuführen von Sauerstoff enthaltendem Gas zu der Sauerstoffelektrode (5).

15. Brennstoffzelle nach Anspruch 14, wobei die Brennstoffzellenvorrichtung (9) ferner eine Wasserzuführungseinrichtung (94) zum Zuführen von Wasser zu der Sauerstoffelektrode (5) aufweist.

16. Brennstoffzelle nach Anspruch 1, wobei die Brennstoff-reaktive Schicht (41) einen Katalysator enthält, der Wasseroxidation begünstigt, und wobei die Sauerstoff-reaktive Schicht (51) einen Katalysator enthält, der Sauerstoffreduktion begünstigt.

17. Brennstoffzellenvorrichtung nach Anspruch 14, wobei die Brennstoff-reaktive Schicht (41) einen Katalysator enthält, der Wasserstoffoxidation begünstigt, und wobei die Sauerstoff-reaktive Schicht (51) einen Katalysator enthält, der Sauerstoffreduktion begünstigt.

## Revendications

1. Pile à combustible (1), comprenant :
une électrode à combustible (4) ayant une couche de diffusion de combustible (42) pour diffuser du combustible et une couche réactive au combustible (41) pour la réaction du combustible, ladite couche réactive au combustible (41) ayant une surface externe en contact avec la couche de diffusion de combustible (42),
une électrode à oxygène (5) comprenant une couche de diffusion d'oxygène (52) pour diffuser de l'oxygène et une couche réactive à l'oxygène (51) pour la réaction de l'oxygène, ladite couche réactive à l'oxygène (51) ayant une surface externe en contact avec la couche de diffusion d'oxygène (52), et
une couche d'électrolyte (3), ladite couche réactive au combustible (41) étant agencée entre ladite couche d'électrolyte (3) et ladite couche de diffusion de combustible (42), et ladite couche réactive à l'oxygène (51) étant agencée entre ladite couche d'électrolyte (3) et ladite couche de diffusion d'oxygène (52),
dans laquelle la couche de diffusion de combustible (42) contient un matériau à caractère hydrofuge, et la couche de diffusion d'oxygène (52) contient un matériau à caractère hydrofuge, dans laquelle ladite couche de diffusion d'oxygène (52) est moins hydrofuge que ladite couche de diffusion de combustible (42), et dans laquelle chacune des couches parmi la couche de diffusion de combustible (42) et la couche de diffusion d'oxygène (52) est formée de plusieurs sous-couches, dont une contient le matériau hydrofuge.

2. Pile à combustible selon la revendication 1, dans laquelle la teneur de la couche de diffusion de combustible (42) en matériau hydrofuge est supérieure à celle de la couche de diffusion d'oxygène (52) en matériau hydrofuge.

3. Pile à combustible selon la revendication 1, dans laquelle la teneur de la couche de diffusion de combustible (42) en matériau hydrofuge est supérieure d'au moins 5% en poids à celle de la couche de diffusion d'oxygène (52) en matériau hydrofuge.

4. Pile à combustible selon la revendication 1, dans laquelle la teneur de la couche de diffusion de combustible (42) en matériau hydrofuge est de 20 à 80% en poids.

5. Pile à combustible selon la revendication 1, dans laquelle la teneur de la couche de diffusion d'oxygène (52) en matériau hydrofuge est de 15 à 65% en poids.

6. Pile à combustible selon la revendication 1, dans laquelle les sous-couches contenant le matériau hydrofuge dans la couche de diffusion de combustible (42) et dans la couche de diffusion d'oxygène (52) contiennent un matériau conducteur d'électricité, et dans laquelle le matériau conducteur d'électricité dans la couche de diffusion de combustible (42) est plus hydrofuge que le matériau conducteur d'électricité dans la couche de diffusion d'oxygène (52).

7. Pile à combustible selon la revendication 2, dans laquelle le matériau hydrofuge est supporté par un matériau conducteur d'électricité particulaire.

8. Pile à combustible selon la revendication 1, dans laquelle la couche de diffusion de combustible (42) comporte sur ses deux côtés des sous-couches contenant du matériau hydrofuge.

9. Pile à combustible selon la revendication 1, dans laquelle la couche de diffusion d'oxygène (52) comporte sur ses deux côtés des sous-couches contenant du matériau hydrofuge.

10. Pile à combustible selon la revendication 1, dans laquelle l'angle de contact avec l'eau sur la surface de la couche de diffusion de combustible (42) est supérieur d'au moins 5° à l'angle de contact avec l'eau sur la surface de la couche de diffusion d'oxygène (52).

11. Pile à combustible selon la revendication 1, dans laquelle l'angle de contact avec l'eau sur la surface de la couche de diffusion de combustible (42) est de 100 à 160°.

12. Pile à combustible selon la revendication 1, dans laquelle l'angle de contact avec l'eau sur la surface de la couche de diffusion d'oxygène (52) est de 90 5 150°.

13. Pile à combustible selon la revendication 1, dans laquelle la pile à combustible utilise de l'hydrogène en tant que combustible.

14. Pile à combustible (1) selon la revendication 1, dans laquelle la pile à combustible (1) fait partie d'un dispositif de pile à combustible (9) comprenant
des moyens d'alimentation en combustible (92) pour fournir du combustible à l'électrode à combustible (4) ; et
des moyens d'alimentation en oxygène (93) pour fournir un gaz contenant de l'oxygène a l'électrode à oxygène (5).

15. Pile à combustible selon la revendication 14, dans laquelle le dispositif de pile à combustible (9) comprend en outre des moyens d'alimentation en eau (94) pour fournir de l'eau à l'électrode à oxygène (5).

16. Pile à combustible selon la revendication 1, dans laquelle ladite couche réactive au combustible (41) contient un catalyseur qui favorise l'oxydation de l'hydrogène et dans laquelle ladite couche réactive à l'oxygène (51) contient un catalyseur qui favorise la réduction de l'oxygène.

17. Dispositif de pile à combustible selon la revendication 14, dans lequel ladite couche réactive au combustible (41) contient un catalyseur qui favorise l'oxydation de l'hydrogène et dans laquelle ladite couche réactive à l'oxygène (51) contient un catalyseur qui favorise la réduction de l'oxygène.
